# EUROPEAN PATENT SPECIFICATION

(11) **EP 0 678 418 B1**
(45) Date of publication and mention of the grant of the patent: **10.06.1998**
(21) Application number: 94120783.9
(22) Date of filing: 27.12.1994
(51) Int. Cl.: B60N 2/48

(54) **A headrest for motor vehicle seats, in particular for car seats**
Kopfstütze für Kraftfahrzeugsitze, insbesondere für PKW
Appui-tête pour sièges de véhicules automobiles, en particulier pour sièges de voitures

(30) Priority: 25.02.1994 IT TO940034 U
(43) Date of publication of application: 25.10.1995
(73) Proprietor: FIAT AUTO S.p.A., 10135 Torino (IT)
(72) Inventor: Rana, Avtar Sinqh, I-10043 Orbassano (Torino) (IT); Vitale, Carlo, I-10042 Nichelino (Torino) (IT)
(74) Representative: Serra, Francesco

(56) References cited:
- EP-A- 0 181 989
- DE-A- 3 440 525
- DE-A- 3 730 210
- DE-A- 3 925 995
- US-A- 2 985 229
- US-A- 3 420 572
- US-A- 4 671 573

## Description

The present invention relates to a headrest for motor vehicle seats, in particular for car seats.

Motor vehicle seats, and especially car seats, include a squab, a backrest and a headrest; headrests may be of two types, the first includes non-adjustable headrests, integral with the structure of the backrest of the seat for which they are intended; the dimensions of these headrests ensure contact with the user's head in the case of an accident, whatever his or her height; headrests of this first type are naturally somewhat bulky and are usually apertured to give the occupant of the seat at least some rear vision.

The second type of headrest is adjustable in height by means of rods or shafts which are fixed to the headrest and slidable in sleeves or bushes fixed to the backrest of the seat; or by means of rods or shafts fixed to the backrest and slidable in sleeves or bushes fixed to the headrest.

The present invention relates to headrests of this second type, that is headrests whose height is adjustable relative to the backrest (see, for example, DE-A-3 730 210, corresponding to the preamble of claim 1.)

One problem with adjustable headrests, inherent in their nature, is that of their correct vertical positioning, that is to say, their positioning at a minimum height which will ensure that the head of the seat occupant bears correctly against the headrest in the case of an accident, thereby giving this occupant the maximum safety.

The problem derives from the fact that the occupant of the seat may lower the headrest until it touches the backrest in order to improve rear vision, for example during a parking manoeuvre, and may then forget to raise it back to its original position or may partially raise it without returning it to the minimum height above the backrest at which it functions as an "effective" headrest.

It is known from DE-A-3 730 210 an automatic system for detecting the seat occupant's head position and from US-A-3 420 572 a system for detecting typical collision conditions and for extracting the headrest if these conditions are verified.

The object of the invention is to provide a headrest for motor vehicles, in particular for cars, which overcomes the above disadvantages by informing the user of incorrect positioning of the headrest and therefore of a safety failure, and which is both easy and economical to manufacture.

The invention achieves this object by providing a headrest for motor vehicle seats, in particular for cars, which has the characteristics specified in the characterising part of claim 1. Further features of the invention are given in the dependent claims which follow.

The invention will now be described, purely by way of non-limitative example, with reference to the appended drawings, in which:
Figure 1 shows a lateral view of a seat with a headrest according to the invention;
Figure 2 is a perspective view of part of a seat with a headrest according to the invention but of a concealed type which can be lowered into a cavity formed in the backrest;
Figure 3 shows a sectioned and enlarged view of the headrest of the invention indicated by the arrow II of Figure 1, with the headrest in its retracted position;
Figure 4 shows the headrest of the invention illustrated in Figure 3 in its extended position;
Figure 5 shows a detail indicated by the arrow IV of Figure 3;
Figure 6 shows the detail of Figure 5 in a different position of the headrest, and
Figure 7 shows a partial section taken in the planes VII-VII of the headrest of Figure 3.

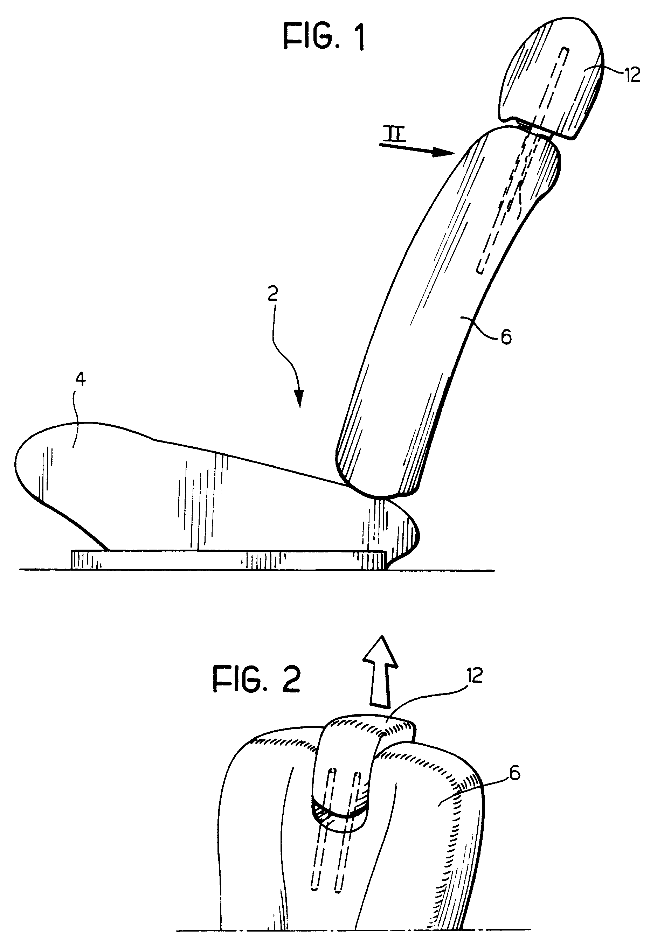

With reference to Figures 1 to 6, a seat is indicated 2 which includes a squab 4 and a backrest 6; the following applies equally to the headrests of Figure 1 and of Figure 2.

The backrest 6 carries a pair of sleeves or bushes 8 of which only one is visible in the drawings; a metal rod 10 is slidable in each sleeve 8 and fixed by known means to a headrest body 12.

The rod 10 is held in position by a locking device 14 fitted onto the sleeve 8 and engaging seats 18 in the rod 10 by virtue of retaining means 16, for example spring clips.

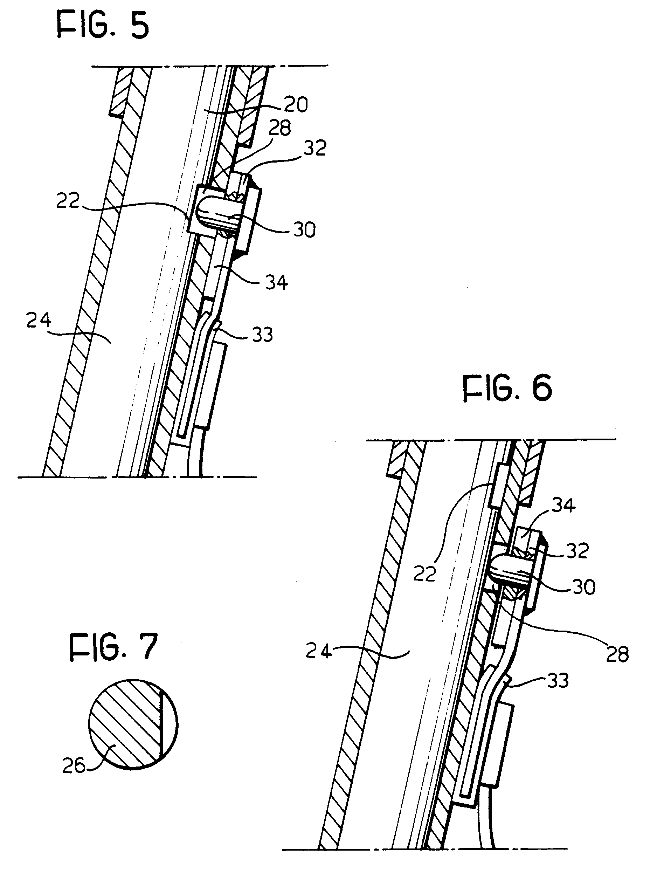

The rod 10 includes a first portion 20, of substantially cylindrical section, a cylindrical portion 22 which is partially flattened as shown in cross section in Figure 7 and has a smaller section than the portion 20, a cylindrical portion 24 having a diameter which is substantially the same as that of the first portion 20 and a flattened cylindrical end portion 26 having a section substantially the same as that of the flattened cylindrical portion 22 (see Figure 7).

A window 28 is formed in the sleeve 8 in correspondence with the position occupied by the flattened cylindrical portion 22 when the headrest body 12 is in its retracted position, that is in its lowest position relative to the backrest 6.

A metal electrical contact 30 is supported in the window 28 by a metal leaf spring 32 fixed to the metal sleeve 8 by known means with the interposition of a sleeve 33 of electrically insulating material.

A layer of electrically insulating material 34 is interposed between the sleeve 8 and the leaf spring 32 so that the electrical contact 30 projects from the insulating layer 34.

The sleeve 8 is earthed while the electrical contact 30 is connected to a light-emitting and/or acoustic signalling device (not shown) which is connected in turn to the positive pole of the vehicle battery.

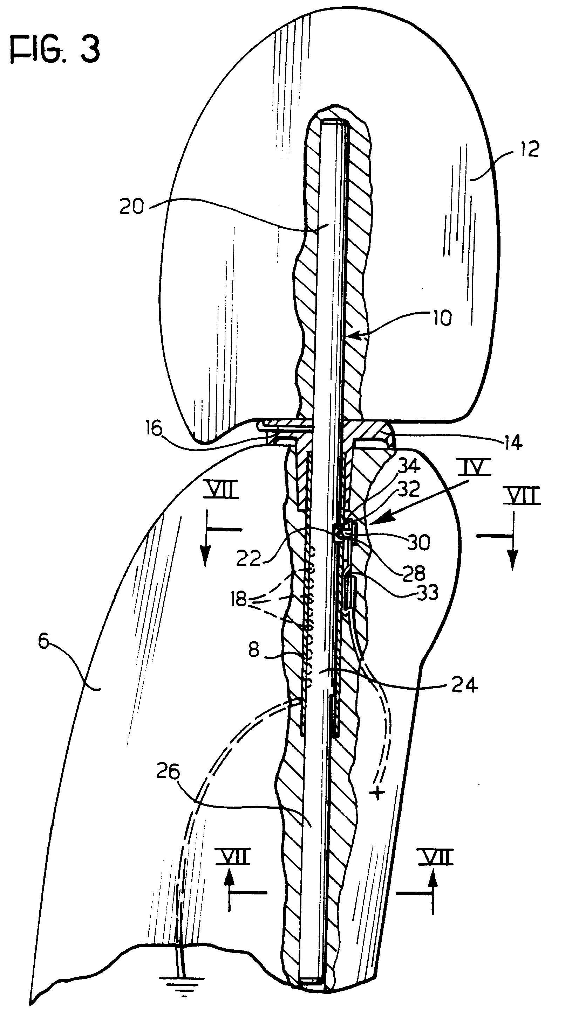

In use, when the headrest body 12 is in the retracted position, that is in its lowest position against the backrest (see Figures 3 and 5), the electrical contact 30 does not touch the flattened cylindrical portion 22 and the electrical circuit formed by the contact 30, the indicator instrument, the positive pole of the battery and the earthed sleeve 8 is open, as the leaf spring 32 is insulated from the sleeve 8 by the insulating layer 34. When the headrest body 12 is raised from the fully retracted position (Figure 6), the electrical contract 30 comes into contact with the portion 24 of the rod 10; the aforesaid electrical circuit is closed and the signalling instrument sends a signal to warn the user of the seat 2 that the headrest body 12 is at a distance from the backrest 6 in which it is extended but would be functionally inoperative in the case of an accident, that is it is not in the region ensuring the safety of the occupant of the seat.

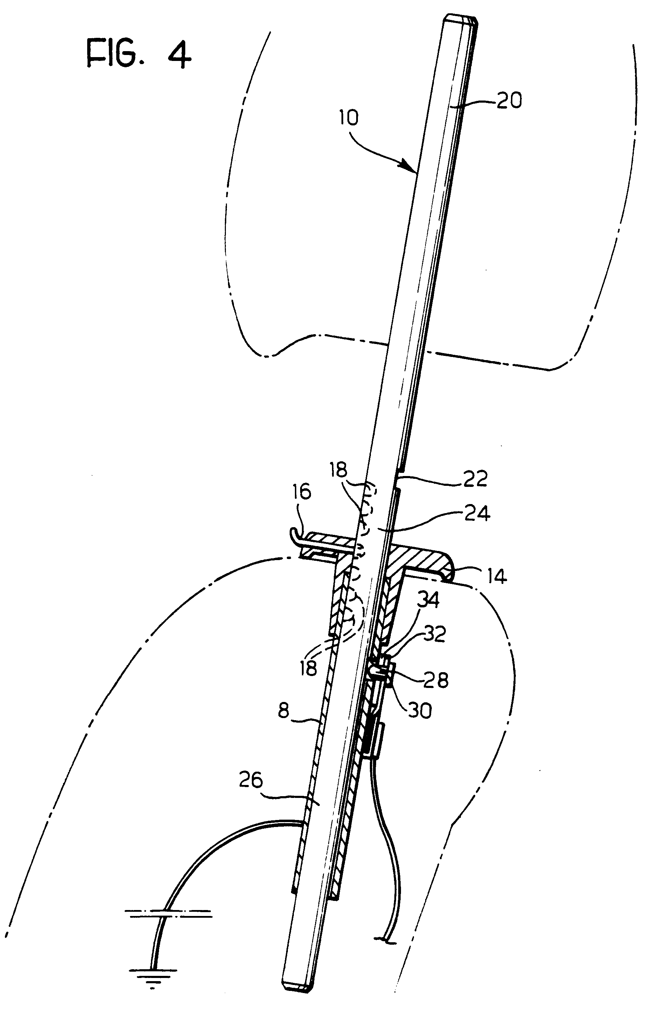

As the headrest body 12 is moved further away from the backrest 6, the signal persists for the entire length of the cylindrical portion 24 of the rod 10 (Figure 4), until the electrical contact 30 is facing the end portion 26 of the rod 10 but does not touch it as this end portion 26 has been flattened so that the contact 30 does not reach it.

In this condition, the aforesaid electrical circuit is interrupted and inhibits the signal from the signalling instrument as at this distance from the backrest 6, and for the entire length of the end portion 26 of the rod 10, the headrest body 12 is in an effective position, according to the height of the seat occupant, ensuring his safety in the case of an accident.

The importance of the warning signal given by the headrest of the invention in ensuring the safety of the seat occupant is clear from the above.

If the seat occupant should position the headrest body 12 at a height corresponding to the length of the cylindrical portion 24 of the rod 10 he would immediately be warned by an acoustic and/or optical signal that in this region the headrest body 12 is not effective and must be further distanced from the backrest 6.

Naturally, the principle of the invention remaining unchanged, manufacturing details and embodiments may be varied with respect to the description and illustrations if not thereby departing from the scope of the invention as defined in the appended claims. In particular, the headrest body may be of a type which is partially or fully embedded in the backrest, the electrical contact may be provided by a resilient strip of insulating material, for example a plastic strip, with an embedded metal contact projecting from the strip in a position facing the window 28 in the sleeve, the acoustic and/or optical signal may be given when the headrest is in the safety position, ending when the headrest is in an unsafe position.

## Claims

1. A headrest for motor vehicle seats, in particular for cars, which includes a headrest body (12), at least one metal rod or shaft (10) fixed to this headrest body (12), a guide sleeve (8) for the at least one metal rod (10) for fixing in the backrest (6) of a motor vehicle seat with one end projecting from and accessible at the top of this backrest (6), a releasable locking device (14) associated with the guide sleeve (8) for releasably locking the at least one metal rod (10) in a plurality of predetermined axial positions, a signalling device (30,32,34) for signalling that the headrest body (12) is positioned below the minimum height that the headrest body (12) may assume relative to the backrest (6) and still retain its ability to restrain the head of the user in the case of impact with the headrest body (12), characterised in that the signal of the signalling device (30,32,34) continues until the headrest body (12) reaches a predetermined and fixed height from the backrest (6).

2. A headrest according to Claim 1, characterised in that the signalling device (30,32,34) includes an electrical feeler (30) fixed to the guide sleeve (8) and facing a window (28) formed in the guide sleeve (8) and arranged to cooperate slidably with a portion (24) of the at least one metal rod (10).

3. A headrest according to Claim 2, characterised in that the portion (24) of the at least one metal rod (10) is between a flattened cylindrical portion (22) and an equally flattened cylindrical end portion (26) of the at least one metal rod (10) which are substantially the same in section.

4. A headrest according to Claim 3, characterised in that the section of the intermediate portion (24) is larger than that of the flattened portion (22) and of the flattened end portion (26).

## Patentansprüche

1. Kopfstütze für die Sitze von Kraftfahrzeugen, im besonderen von Autos, wobei die Kopfstütze aufweist: einen Kopfstützenkörper (12), zumindest eine Metallstange oder Welle (10), die am Kopfstützenkörper (12) angebracht ist, eine Führungsbuchse (8) für die zumindest eine Metallstange (10), um sie in der Rückenlehne (6) des Sitzes eines Kraftfahrzeugs zu befestigen, wobei ein Ende nach oben aus dieser Rückenlehne (6) vorspringt und zugänglich ist, eine freigebbare Verriegelungseinrichtung (14), die der Führungsbuchse (8) zugeordnet ist, um die zumindest eine Metallstange (10) in einer Vielzahl von vorgegebenen Axialstellungen freigebbar zu verriegeln, sowie eine Signaleinrichtung (30, 32, 34), um ein Signal abzugeben, daß der Kopfstützenkörper (12) unterhalb jener Minimalhöhe angeordnet ist, die der Kopfstützenkörper (12) relativ zur Rückenlehne (6) einnehmen kann und in der der Kopf des Benützers vom Kopfstützenkörper (12) im Falle eines Aufpralls zurückgehalten wird, dadurch gekennzeichnet, daß das Signal der Signaleinrichtung (30, 32, 34) andauert, bis der Kopfstützenkörper (12) eine vorgegebene und festgelegte Höhe von der Rückenlehne (6) erreicht.

2. Kopfstütze gemäß Anspruch 1, dadurch gekennzeichnet, daß die Signaleinrichtung (30, 32, 34) einen elektrischen Taster (30) aufweist, der an der Führungsbuchse (8) befestigt ist und einem Fenster (28) gegenüberliegt, das in der Führungsbuchse (8) ausgebildet ist, wobei der Taster (30) so angeordnet ist, daß er mit einem Teil (24) der zumindest einen Metallstange (10) gleitend zusammenwirkt.

3. Kopfstütze gemäß Anspruch 2, dadurch gekennzeichnet, daß der Teil (24) der zumindest einen Metallstange (10) zwischen einem abgeflachten zylindrischen Teil (22) und einem ähnlich abgeflachten zylindrischen Endteil (26) der zumindest einen Metallstange (10) liegt, die im wesentlichen den gleichen Querschnitt besitzen.

4. Kopfstütze gemäß Anspruch 3, dadurch gekennzeichnet, daß der Querschnitt des Zwischenteils (24) größer als der Querschnitt des abgeflachten Teils (22) sowie des abgeflachten Endteils (26) ist.

## Revendications

1. Appui-tête pour siège de véhicule à moteur, en particulier pour automobile, qui comporte un corps (12) d'appui-tête, au moins un arbre ou tige métallique (10) fixé au corps (12) d'appui-tête, un manchon (8) de guidage d'au moins une tige métallique (10) destiné à assurer la fixation dans le dossier (6) du siège de véhicule à moteur, une extrémité dépassant de la partie supérieure du dossier (6) et étant accessible à cette partie supérieure, un dispositif amovible de blocage (14) associé au manchon de guidage (8) et destiné à bloquer temporairement au moins une tige métallique (10) à plusieurs positions axiales prédéterminées un dispositif de signalisation (30, 32, 34) destiné à signaler le fait que le corps (12) d'appui-tête est placé au-dessous de la hauteur minimale que peut prendre le corps d'appui-tête (12) par rapport au dossier (6) et garde encore son aptitude à retenir la tête de l'utilisateur en cas de choc avec le corps d'appui-tête (12), caractérisé en ce que le signal du dispositif de signalisation (30, 32, 34) continue jusqu'à ce que le corps d'appui-tête (12) atteigne une hauteur fixe et prédéterminée par rapport au dossier (6).

2. Appui-tête selon la revendication 1, caractérisé en ce que le dispositif de signalisation (30, 32, 34) comporte un palpeur électrique (30) fixé au manchon de guidage (8) et tourné vers une fenêtre (28) formée dans le manchon de guidage (8), et destiné à coopérer par coulissement avec une partie (24) d'au moins une tige métallique (10).

3. Appui-tête selon la revendication 2, caractérisé en ce que la partie (24) d'au moins une tige métallique (10) est placée entre une partie cylindrique aplatie (22) et une partie cylindrique d'extrémité également aplatie (26) d'au moins une tige métallique (10) qui ont pratiquement la même section.

4. Appui-tête selon la revendication 3, caractérisé en ce que la section de la partie intermédiaire (24) est supérieure à celle de la partie aplatie (22) et à celle de la partie aplatie d'extrémité (26).
